# EUROPÄISCHE PATENTSCHRIFT

(11) **EP 0 819 722 B1**
(45) Veröffentlichungstag und Bekanntmachung des Hinweises auf die Patenterteilung: **13.01.1999**
(21) Anmeldenummer: 96810469.5
(22) Anmeldetag: 16.07.1996
(51) Int. Cl.: C08J 3/03, B01J 19/00, C08F 6/14

(54) **Beschichtungsverfahren unter Verwendung einer neutralisierten Vinylidenchloridpolymer und -copolymerdispersion.**
Coating process utilising neutralized vinylidene chloride polymer or copolymer dispersions.
Procédé de recouvrement utilisant des dispersions de (co)polymères de chlorure de vinylidène et leur application

(43) Veröffentlichungstag der Anmeldung: 21.01.1998
(73) Patentinhaber: Aerni-Leuch Ag, 3097 Liebefeld (CH)
(72) Erfinder: Bürki, Stefan Alain, 3600 Thun (CH); Münster, Jochen, 3312 Fraubrunnen (CH)
(74) Vertreter: BOVARD AG - Patentanwälte

(56) Entgegenhaltungen:
- DE-A- 2 825 140
- US-A- 3 216 925
- US-A- 4 490 491
- DATABASE WPI Week 8704 Derwent Publications Ltd., London, GB; AN 87-025111 XP002021232 & JP-A-61 281 085 (KUBOTA LTD)

## Beschreibung

Die vorliegende Erfindung betrifft ein Verfahren für die Beschichtung von bahnförmigen Materialien, meistens Papierbahnen oder Kunststoffolien unter Verwendung von vollständig oder teilweise neutralisierten Vinylidenchloridpolymer und -copolymerdispersionen (,,PVdC-Dispersionen"). Weitgehend neutralisierte Dispersionen bewirken eine verbesserte Handhabung in Maschinen zur Herstellung dieser beschichteten Bahnmaterialien und in Maschinen zur Weiterverarbeitung derselben.

Die durch die Beschichtung mit Vinylidenchloridcopolymerdispersionen erzeugten Mehrschichtverbundmaterialien, im folgenden als "Verbunde" oder "Verbundfolien" bezeichnet, werden unter anderem zur Verpackung von Lebensmitteln oder Pharmaprodukten gebraucht. Beispielsweise werden zur Verpackung von Pharmaprodukten PVC-Folien oder PVC-PE-Verbundfolien mit Vinylidenchlorid-Copolymer-Dispersionen beschichtet und anschliessend in einem Thermoformprozess zu Blistern verarbeitet, die dann mit dem Packgut befüllt und mit einer Aluminiumfolie durch Versiegeln verschlossen werden. Vinylidenchloridmonomere werden meistens zu Copolymeren mit (Meth)acrylaten, Vinylchlorid oder Acrylnitril zu Copolymeren polymerisiert. Aufgabe der Vinylidenchloridcopolymerbeschichtung ist die Bildung einer siegelfähigen Beschichtung und/oder Bildung einer Barrierenschicht für Wasserdampf, Sauerstoff und Aromen.

Vinylidenchlorid-Copolymer-Dispersionen, im folgenden PVdC-Dispersionen genannt, besitzen im allgemeinen einen pH-Wert von ca. 1 bis 3. Die saure Reaktion der Dispersionen beruht hauptsächlich auf einem Gehalt an Chlorwasserstoff. Dieser kann vor, während oder nach dem Herstellungsverfahren zugegeben worden sein oder aus vorhandenen Komponenten freigesetzt werden.

Im Dokument WPI 87-025111 (JP-A-61281058) ist ein Mittel für die Beschichtung der äusseren Oberfläche von Mörtel oder Zement beschrieben, welches eine Dispersion eines anionischen Harzes enthält. Der pH-Wert des beschriebenen Versiegelungsmittels wird auf einen Wert von 3,5 bis 5,5 eingestellt, indem ein Neutralisationsmittel und ein nichtionisches oberflächenaktives Mittel zugegeben werden. In diesem Dokument gibt es keine Hinweise auf Beschichtungsmaterial für die Herstellung einer Barrierenschicht für Verpackungen.

Die DE-A-2 825 140 beschreibt ein vernetzbares Latexgewebeimprägniermittel, das für die Imprägnierung von porösen, fibrösen Materialien geeignet ist. Die beschriebene Latexzusammensetzung enthält u.a. ein Neutralisationsmittel, welches auf einen pH-Bereich von etwa 6,0 bis 8,0 gepuffert ist. Das Anwendungsgebiet dieser Publikation ist verschieden von demjenigen der vorliegenden Anmeldung. Es besteht kein Hinweis auf eine Herstellung einer Barrierenschicht auf Materialbahnen für Verpackungsmaterial.

In der US-A-4 490 491 ist eine wässrige Latexzusammensetzung beschrieben. Diese kann 15 - 40% Vinylidenchlorid enthalten. Gemäss den Beispielen 4 - 6 wird die Zusammensetzung neutralisiert, wobei pH-Werte um 7 erhalten werden. Der in diesem Dokument beschriebene Polymerlatex ist vorwiegend für eine Verwendung in Anstreichfarben bestimmt. Eine Anwendung in der Verpackungsindutrie für die Herstellung von Barrierenschichten ist nicht erwähnt.

Für die Herstellung von Barrierenschichten werden Dispersionen in verschiedenen Verfahren auf Bahnmaterialien nass aufgetragen und anschliessend im allgemeinen mit gewärmter Luft getrocknet, worauf Filmbildung der Dispersion auftritt. Der Chlorwasserstoff bleibt aus technischen Gründen nach dem Trocknungsprozess zu einem gewissen Anteil der ursprünglichen Menge zusammen mit einem gewissen Restwassergehalt im PVdC-Film zurück.

Beim Erhitzen der Folie, z.B. im Zuge eines Thermoformprozesses, wird ein Teil des eingelagerten Wassers und des Chlorwasserstoffes zusammen mit einer gewissen Menge an Chlorwasserstoff, der aus der thermochemischen Eliminierungsreaktion am Poly(vinylidenchlorid) stammt, freigesetzt und kann Korrosion an Maschinenteilen sowie geruchliche Beeinträchtigungen hervorrufen. Durch sich von korrodierenden Teilen ablösende Korrosionsprodukte besteht auch die Gefahr der Kontamination des Packgutes.

Es wurde nun gefunden, dass das obengenannte Problem gelöst werden kann, wenn Vinylidenchlorid-Polymer oder -Copolymer-Dispersionen durch Zugabe einer entsprechenden Menge einer Base, z.B. eines Alkalihydroxides, eines geeigneten organischen oder anorganischen Puffersalzes oder Puffersalzmischungen oder Mischungen aus Puffersalzen und starken Basen, wie Alkalihydroxiden, am besten in Form einer wässrigen Lösung, nach Art einer Säure-Base-Reaktion reduziert (pH < 7), kompensiert (pH = 7) oder überkompensiert (pH > 7) werden. Ideal ist eine pH-Einstellung im Bereich von 4,5 bis 7.

Gegenstand der vorliegenden Erfindung ist demzufolge das im Patentanspruch 1 definierte Beschichtungsverfahren.

Zur Reduktion des Säureanteils der PVdC-Dispersionen werden diese für die erfindungsgemässe Verwendung teilweise oder vollständig neutralisiert. Im folgenden Text wird diese behandlung kurz "Neutralisation" oder,,teilweise oder vollständige Neutralisation" genannt; darunter soll eine Anhebung des pH-Wertes verstanden werden, damit ein Produkt erhalten wird, das einen pH-Wert im Bereich von 4 bis 8 aufweist und das nicht koaguliert. Das Verfahren kann batchweise durch langsame Zugabe der verdünnten wässrigen Base zur Dispersion im Rührreaktor, durch Zugabe der verdünnten wässrigen Base in die fliessende Dispersion mit nachfolgender Homogenisierung z.B. mit einem statischen Mischer ("Durchflussneutralisation"), oder auf eine andere geeignete Weise durchgeführt werden.

Die Neutralisation der Dispersionen blieb bisher unversucht, da man Einbussen in der Stabilität derselben, insbesondere eine Erhöhung der Scherkraft-lnstabilität, der Koagulationsneigung und der Lagerfähigkeit, zum Beispiel der Sedimentation und Phasentrennung bei Dispersionen sowie die chemische Instabilität (z.B. Vergilbungsneigung) bei Dispersionen und Beschichtungen, befürchtete.

Das beschriebene Verfahren ermöglicht eine Neutralisation der PVdC-Dispersionen ohne Auftreten dieser Störungen, jedoch unter Erreichung folgender wesentlicher Verfahrens- und Produkt-Vorteile:
- Abspaltung von Chlorwasserstoff beim Beschichten und Trocknen des flüssigen Dispersionsfilms wird reduziert und damit eine Korrosion an Maschinenteilen der Beschichtungsanlage vermindert.
- Das Beschichtungsverhalten wird verbessert.
- Die Chlorwasserstoffemission aus erhitzten, PVdC-beschichteten Bahnmaterialien in Tiefzieh- oder anderen Verarbeitungsanlagen und damit die Korrosion und andere Beeinträchtigungen werden stark reduziert.
- Die Tropenklimabeständigkeit von Verbundfolien, sichtbar an einer Veränderung der Verbundhaftung während einer Klimalagerung, wird verbessert.
- Der Restwassergehalt beschichteter Folien ist bei gleichen Beschichtungs- und Trocknungsbedingungen bei der Verwendung von neutralisierten PVdC-Dispersionen tiefer als bei der Verwendung von nichtneutralisierten.

Als Ausgangsmaterial können handelsübliche PVdC-Dispersionen verwendet werden. Das für die Neutralisation bzw. pH-Erhöhung verwendete Neutralisationsmittel muss eine möglichst hohe Konzentration aufweisen (je nach Löslichkeit beispielsweise 0,5 bis 2,5 mol/l), da sonst eine zu starke Verdünnung stattfindet. Eine Zugabe von festen Neutralisationsmitteln ist ebenfalls möglich, führt jedoch fast immer zur Koagulation.

Die Zugabegeschwindigkeit muss so eingestellt werden, dass insbesondere bei hochkonzentrierten und bei starken Basen keine Koagulation stattfindet. Ebenso muss durch eine geeignete Rühr- oder Durchmischungsanlage für eine gute Durchmischung gesorgt werden.

Das Neutralisationsverfahren kann beim Hersteller der Dispersion, beim Beschichter vor der Herstellung der Verbundmaterialien oder durch einen Dritten durchgeführt werden. Die neutralisierte Dispersion, welche ein Zwischenprodukt für Hersteller von Folien mit einer Barrierenschicht oder Verpackungen darstellt, weist u.a. eine verminderte Ätz- und Korrosionswirkung auf metallische Teile auf, welche mit der Dispersion in Kontakt kommen.

Anhand der beiliegenden Figuren wird die Erfindung näher erläutert, es zeigt
Fig. 1 eine schematische Darstellung einer Anlage zur Neutralisation von PVdC-Dispersionen, und
Fig. 2 eine schematische Darstellung einer Mischeinheit in einer Neutralisationsanlage.

Die nachstehenden Beispiele dienen der näheren Erläuterung der Erfindung, ohne dass dadurch der Geltungsbereich der in den Ansprüchen definierten Erfindung eingeschränkt werden soll. Erfindungsgemäss werden zur Beschichtung in speziellen Ausführungsformen Dispersionen verwendet, wie sie gemäss den nachstehenden Beispielen erhalten werden.

### Beispiel 1

### Reaktorneutralisation

In einem 1'000-Liter-Rührbehälter mit Zugabevorrichtung für das Neutralisationsmittel und einem pH-Kontrollinstrument werden 1'000 kg (ca. 770 1) PVdC-Dispersion vorgelegt. Die ungefähre Menge der für eine Neutralisation erforderlichen Natriumhydroxidlösung wird nach untenstehender Tabelle bestimmt. Unter gutem, aber nicht schaumbildendem Rühren wird eine 2,5 molare Natriumhydroxidlösung solange langsam zugegeben, bis der pH-Wert auf 4,5 bis 7 gestiegen ist. Sollte der pH-Wert auf über 7 ansteigen, wird eine entsprechende Menge unneutraliserte Dispersion zugegeben. Die Mischung wird weitere 5 Minuten gerührt und kann dann für ein Beschichtungsverfahren verwendet werden.
Berechnete Menge 2,5 M Natriumhydroxid-Lösung zur Neutralisation von PVdC-Dispersionen; Festkörpergehalt: 60%.

| Ursprünglicher pH-Wert der Dispersion | Zugabe an 2,5 M NaOH pro kg Dispersion (ml) |
|---|---|
| 1,4 | 6,37 |
| 1,6 | 4,02 |
| 1,8 | 2,54 |
| 2,0 | 1,6 |
| 2,2 | 1,01 |
| 2,4 | 0,64 |
| 2,6 | 0,4 |
| 2,8 | 0,25 |
| 3,0 | 0,16 |

### Beispiel 2

### Durchflussneutralisation

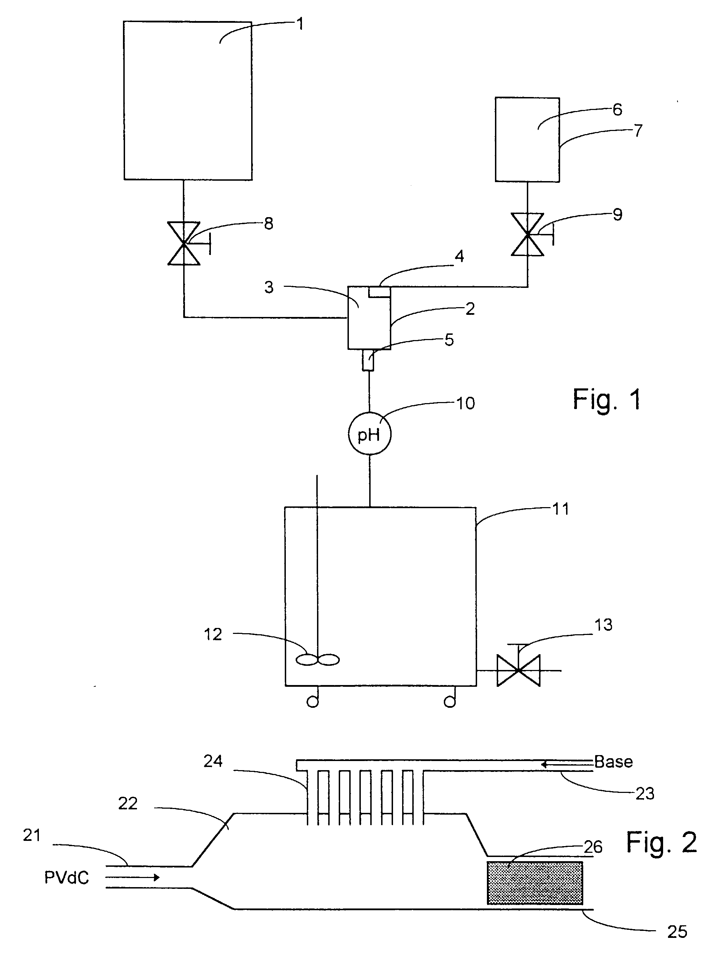

Aus einem Vorratstank wird eine PVdC-Dispersion in mobile Gebinde mit einem Volumen von ca. 1'000 Litern umgefüllt, die zum Transport zu einer Beschichtungsanlage dienen. Bei diesem Umfüllprozess wird eine Durchflussneutralisation durchgeführt. Figur 1 zeigt eine Neutralisationsanlage für den Handbetrieb (Ausführung mit Dosierventilen). Aus dem PVdC-Vorratsgefäss 1 fliesst die Dispersion in die Mischeinheit 2, bestehend aus einer Mischkammer 3 mit statischem Mischer 5 ein. In der Mischkammer 3 wird über ein Düsensystem 4 die Base 6 aus dem Basenvorratsbehälter 7 zudosiert und im nachfolgenden statischem Mischer 5 das Gemisch homogenisiert. Die Dosierung der Base erfolgt durch Betätigung der Ventile 8,9 per Hand oder automatisch durch eine entsprechende elektronische Regelung aufgrund der Anzeige bzw. dem Signal der nach der Mischeinheit installierten pH-Messeinrichtung 10. Der pH-Sollwert wird zuvor festgelegt. Dabei können als Ventile 8,9 z.B. Hand- bzw. Magnetventile oder Dosierpumpen eingesetzt werden. Die neutralisierte Dispersion wird alsdann in einen Behälter 11 übergeführt. Zur weiteren Homogenisierung wird die Mischung während und etwa 5 min nach Beendigung der Neutralisation mit einem Rührwerk 12 gerührt. Aus dem Behälter 11 kann die neutralisierte Dispersion einer Beschichtungsanlage zugeführt werden. Zur Regelung der Zufuhr der Dispersion zur Beschichtungsanlage dient das Ventil 13.

Aus Figur 2 geht die Konstruktion einer Mischeinheit hervor. Die Dispersion fliesst über eine Zuleitung 21 in die Mischkammer 22, an welche ein Düsensystem 23 angeschlossen ist, welches der Zudosierung des Neutralisationsmittels (Base) in die Mischkammer 22 dient, wobei die Base über die Düsen 24 eingeleitet wird. Die Düsen 24 müssen einen genügend grossen Abstand von der Dispersion aufweisen, um eine Koagulation und Verstopfung zu vermeiden. Der Querschnitt des Abflusses 25 muss wegen der Rückstaugefahr grösser sein als derjenige des Zuflusses 21. Nach dem Passieren der Mischkammer erfolgt die Homogenisierung in einem statischen Mischer 26, der sich am Ausgang der Mischkammer befindet.

Alternativ können bei den Neutralisationen ebenfalls Puffersysteme verwendet werden, da diese aufgrund ihres Titrationsverhaltens eine einfachere und sicherere Einstellung des pH-Wertes gewährleisten als dies bei starken Basen der Fall ist. Die Neutralisation kann beispielsweise durch eine Trinatriumphosphatlösung oder, bei besonders sauren Dispersionen, vorteilhaft durch ein Gemisch aus einer Trinatriumphosphat- und einer Natriumhydroxidlösung erfolgen. Trinatriumphosphat und das Gemisch aus Trinatriumphosphat und Natriumhydroxid haben den Vorzug, dass auch bei sehr schneller Einleitung der Lauge in die Dispersion nur sehr schwer eine Koagulation herbeizuführen ist. Die Verwendung von Puffersalzen hat sich als günstig erwiesen, da sie die Eigenschaft aufweisen, den pH-Wert eines Systems in einem Bereich konstant zu halten. Aus diesem Grund führt eine spätere Freisetzung von H⁺-lonen im System, beispielsweise durch chemische Chlorwasserstoffeliminierung aus dem Poly(vinylidenchlorid), nicht zu einem wesentlichen Absinken des pH-Wertes. Dies gilt ebenfalls sinngemäss für die fertig beschichteten Materialien. Benetzungsstörungen, die bei der Beschichtung mit neutralisiertem Produkt auftreten können, werden durch die Zugabe von oberflächenaktiven Stoffen wie Netzmitteln, Emulgatoren usw. behoben.

## Patentansprüche

1. Verfahren zur Auftragung einer Barrierenschicht aus Vinylidenchloridpolymer oder -copolymer auf Papier oder auf Ein- oder Mehrschichtfolien aus Kunststoff, dadurch gekennzeichnet, dass auf das Papier oder die Ein- oder Mehrschichffolie aus Kunststoff eine Vinylidenchloridpolymer- oder -copolymerdispersion aufgetragen wird, die teilweise oder vollständig mit einem Neutralisierungsmittel behandelt worden ist, wobei ein mit einer Barrierenschicht versehenes Papier-, Ein- oder Mehrschichtkunstoffolienmaterial erhalten wird, das keine korrodierende Wirkung auf Maschinen zur Weiterverarbeitung ausübt.

2. Verfahren nach Anspruch 1, dadurch gekennzeichnet, dass die Vinylidenchlorid-Polymer- und -copolymerdispersion auf einen pH-Wert im Bereich von 4,5 bis 7, vorzugsweise 6,5 bis 7, eingestellt ist.

3. Verfahren nach Anspruch 1 oder 2, dadurch gekennzeichnet, dass das Neutralisationsmittel eine starke Base, ein Puffersalz, eine Pufferlösung oder eine Mischung davon ist.

4. Verfahren nach Anspruch 3, dadurch gekennzeichnet, dass das Neutralisationsmittel Natriumhydroxid, vorzugsweise mit einer Konzentration von etwa 2,5 mol/l oder Trinatriumphosphat, vorzugsweise in einer Konzentration von 0,5 mol/l oder eine Mischung davon, vorzugsweise mit dem Verhältnis 3:2 ist.

5. Verfahren nach einem der Ansprüche 1 bis 4, dadurch gekennzeichnet, dass eine Vinylidenchloridpolymer- oder -copolymerdispersion verwendet wird, die in einem Behälter teilweise oder vollständig neutralisiert worden ist, indem das Neutralisationsmittel unter kontinuierlichem Mischen zudosiert wurde.

6. Verfahren nach einem der Ansprüche 1 bis 4, dadurch gekennzeichnet, dass eine Vinylidenchloridpolymer- oder -copolymerdispersion verwendet wird, die in einem Durchlaufverfahren teilweise oder vollständig neutralisiert wurde, indem die Dispersion kontinuierlich in eine Mischkammer (22) eingeleitet wurde, in welche durch ein Düsensystem (23) das Neutralisationsmittel kontinuierlich eingeleitet wurde, wonach die Mischung kontinuierlich durch einen statischen Mischer (26) durchgeleitet und schliesslich das Gemisch in einen Vorratsbehälter oder eine Beschichtungsanlage geführt wurde.

7. Verfahren nach Anspruch 6, dadurch gekennzeichnet, dass der pH-Wert der teilweise oder vollständig neutralisierten Dispersion nach der Passage durch den statischen Mischer kontrolliert wurde.

8. Verfahren nach Anspruch 6 oder 7, dadurch gekennzeichnet, dass die Kontrolle des pH-Wertes durch ein Messystem durchgeführt wurde, welches durch Ventile den Zufluss von Dispersion und Neutralisationsmittel steuert.

## Claims

1. Method of applying a barrier layer of vinylidene chloride polymer or copolymer on paper or on single or multi-layer films of plastic, characterised in that applied to the paper or the single or multi-layered film of plastic is a vinylidene chloride polymer or copolymer dispersion which is treated partially or completely with a neutralising agent, a paper, single or multi-layered plastic film material having a barrier layer being obtained, which material has no corroding effect on machines for further processing.

2. Method according to claim 1, characterised in that the pH of the vinylidene chloride polymer and copolymer dispersion is adjusted so that it is in the range of 4.5 to 7, preferably 6.5 to 7.

3. Method according to claim 1 or 2, characterised in that the neutralising agent is a strong base, a buffer salt, a buffer solution or a mixture thereof.

4. Method according to claim 3, characterised in that the neutralising agent is sodium hydroxide, preferably in a concentration of about 2.5 mol/l, or trisodium phosphate, preferably in a concentration of 0.5 mol/l, or a mixture thereof, preferably in a proportion of 3:2.

5. Method according to one of the claims 1 to 4, characterised in that a vinylidene chloride polymer or copolymer dispersion is used which is partially or completely neutralised in a vessel to which the neutralising agent is dosed with continuous stirring.

6. Method according to one of the claims 1 to 4, characterised in that a vinylidene chloride polymer or copolymer dispersion is used, which has been partially or completely neutralised in a continuous process, in that the dispersion is introduced continuously into a mixing chamber (22) in which the neutralising agent is introduced continuously through a jet system (23), after which the mixture is led continuously through a static mixer (26) and finally the mixture is led into a storage vessel or a coating facility.

7. Method according to claim 6, characterised in that the pH value of the partially or completely neutralised dispersion is checked after passage through the static mixer.

8. Method according to claim 6 or 7, characterised in that the control of the pH value is carried by means of a measuring system which, by means of valves, controls the flow of the dispersion and the neutralising agent.

## Revendications

1. Procédé d'application d'une couche d'isolation de polymères ou copolymères de chlorure de vinylidène sur papier ou sur film à couche unique ou à plusieurs couches en matière synthétique, caractérisé en ce qu'on applique sur le papier ou le film à couche unique ou à plusieurs couches en matière synthétique une dispersion de polymères ou copolymères de chlorure de vinylidène qui a été traitée partiellement ou complètement avec un agent neutralisant, obtenant ainsi un papier, un matériau de film en matière synthétique à couche unique ou à plusieurs couches pourvu d'une couche d'isolation qui n'exerce pas d'effet corrosif sur des machines lors de traitement ultérieur.

2. Procédé selon la revendication 1, caractérisé en ce que la dispersion de polymères et copolymères de chlorure de vinylidène est réglée à une valeur de pH de l'ordre de 4,5 à 7, de préférence 6,5 à 7.

3. Procédé selon la revendication 1 ou la revendication 2, caractérisé en ce que l'agent neutralisant est une base forte, un sel tampon, une solution tampon ou un mélange de ceux-ci.

4. Procédé selon la revendication 3, caractérisé en ce que l'agent neutralisant est de l'hydroxyde de sodium, de préférence dans une concentration d'environ 2,5 mol/l ou du phosphate de trisodium, de préférence dans une concentration de 0,5 mol/l ou un mélange de ceux-ci, de préférence dans un rapport de 3:2.

5. Procédé selon l'une des revendications 1 à 4, caractérisé en ce qu'on utilise une dispersion de polymères ou copolymères de chlorure de vinylidène qui a été partiellement ou totalement neutralisée dans un récipient en y dosant l'agent neutralisant tout en mélangeant continuellement.

6. Procédé selon l'une des revendications 1 à 4, caractérisé en ce qu'on utilise une dispersion de polymères ou copolymères de chlorure de vinylidène qui a été partiellement ou complètement neutralisée par un procédé en continu en envoyant en continu la dispersion dans une chambre de mélange (22) dans laquelle l'agent neutralisant a été introduit en continu par un système à jet (23), après quoi le mélange a été guidé en continu à travers un mélangeur statique (26) et finalement le mélange a été conduit dans un récipient de stockage ou dans une installation de recouvrement.

7. Procédé selon la revendication 6, caractérisé en ce que la valeur pH de la dispersion partiellement ou totalement neutralisée a été contrôlée après passage à travers le mélangeur statique.

8. Procédé selon la revendication 6 ou la revendication 7, caractérisé en ce que le contrôle de la valeur pH a été effectué par un système de mesures qui, par des valves, commande l'écoulement de la dispersion et de l'agent neutralisant.
